# EUROPEAN PATENT APPLICATION

(11) **EP 4 404 298 A1**
(43) Date of publication of application: **24.07.2024**
(21) Application number: 22870293.2
(22) Date of filing: 15.09.2022
(51) Int. Cl.: H01M 4/36, H01M 4/525, H01M 4/505, H01M 4/62, C01G 53/00, H01M 10/052

(54) **NOVEL ONE-BODY PARTICLE FOR POSITIVE ELECTRODE ACTIVE MATERIAL AND METHOD FOR PREPARING NOVEL ONE-BODY POWDER**

(30) Priority: 15.09.2021 KR 20210123124
(71) Applicant: L&F Co., Ltd., Daegu 42724 (KR)
(72) Inventor: CHANG, Gi Hwan, Daegu 42712 (KR); CHANG, Sung Kyun, Daegu 42712 (KR); SON, Hwa Young, Daegu 42712 (KR); HAN, Hyun Gyu, Daegu 42712 (KR); JO, Jae Joon, Daegu 42712 (KR); KIM, Han Ah, Daegu 42712 (KR); JEON, Seul Gi, Daegu 42712 (KR); KIM, Doe Hyoung, Daegu 42712 (KR)
(74) Representative: Frenkel, Matthias Alexander
(86) International application number: PCT/KR2022/013757
(87) International publication number: WO 2023/043209

(57) **Abstract**

Disclosed are a novel one-body particle for cathode active materials including a core and a coating layer formed on at least a part of the core, wherein the coating layer contains Co and a structure-stabilizing element, the core is present as a non-aggregated primary particle, and the structure-stabilizing element has a bond dissociation energy (BDE) with oxygen (O) greater than a bond dissociation energy (BDE) of Co and oxygen (O), and a method of preparing a novel one-body powder containing the same.

## Description

### [Technical Field]

The present invention relates to a novel one-body particle for cathode active materials and a method of preparing a novel one-body powder, and more particularly to a novel one-body particle that contains a core in the form of a non-aggregated primary particle, and Co and a structure-stabilizing element in the coating layer of the core, and thus is capable of alleviating oxygen desorption, and improving resistance, capacity, efficiency, residual lithium, and lifespan characteristics, while solving the problems of conventional secondary particle structures, and a method of preparing a novel one-body powder.

### [Background Art]

Lithium secondary batteries are used in various fields such as mobile devices, energy storage systems, and electric vehicles due to the high energy density and voltage, long cycle life, and low self-discharge rate thereof.

The cathode active material particle used in a lithium secondary battery generally has a structure of secondary particle having a size of several µm in which fine primary particles having a sub-micron size are aggregated. Such a secondary particle structure has a problem in that the secondary particle is broken as the aggregated primary particles are separated during repeated charging and discharging, causing deterioration in battery characteristics. Since this problem is due to the structural characteristics of the secondary particle, it is difficult to solve the problem without changing the structure thereof. Therefore, a one-body particle cathode active material having a novel structure has been developed.

This one-body active material has a "non-aggregated single particle (primary particle)" structure rather than a conventional "secondary particle structure including aggregated primary particles" and undergoes no particle separation during charging and discharging, and thus solves problems occurring in secondary particle active materials because there is almost no particle aggregation.

Here, the expression "there is almost no particle aggregation" means that a small amount of aggregate is inevitably present during the preparation of new one-body particles/powders. That is, it is impossible for all particles to be completely separated from one another due to technical limitations, so some aggregate may be unintentionally formed. The proportion of some aggregated particles may be within 30% of the total active material powder. Such some aggregated particles are not secondary particles.

In addition, the term "active material" encompasses both "particle" and "powder" including a plurality of particles. In the art, both particles and powders are commonly called "active materials". It is common to distinguish whether the term refers to particles or powder depending on the context in which it is used, but in the present invention, "particles" and "active material (powder)" are expressed separately to avoid confusion.

Unlike conventional secondary particles, the novel one-body particle has a size of several µm and does not have an aggregate structure, thus causing no particle separation during charging and discharging, and fundamentally solving problems occurring in secondary particle structures.

However, the secondary particle active material has been commercialized for a long time and has been applied to various industrial fields, but the one-body particle active material is used only for research purposes because it is very difficult to secure stability thereof. This is due to structural differences therebetween. As described above, the reason for this is that problems of the secondary particle active material that are difficult to solve can be easily avoided by the one-body particle, whereas problems that do not need to be considered in the secondary particle active material are critical in the one-body particle, and are very difficult to solve. The present applicant developed the present invention in view of the problems caused by such structural differences.

Oxygen desorption is a typical problem of one-body particles. The extent of oxygen desorption increases in proportion to the calcination temperature and the Ni content, and when the calcination temperature is low, the degree of oxygen desorption is very low, even when the Ni content is high.

In general, high-Ni (60 mol% or more of Ni) active materials in the form of secondary particles undergo very little oxygen desorption because the calcination temperature is as low as 700 to 800°C during production. In particular, as the Ni content increases, the calcination temperature is decreased to about 700°C and thus there is almost no oxygen desorption. For this reason, various studies are being conducted on secondary particle active materials to further improve capacity/output/efficiency, etc. rather than oxygen desorption.

Meanwhile, one-body particles have a high calcination temperature of about 850 to about 1,000°C, thus increasing oxygen desorption. It is impossible to produce a one-body particle structure at a low calcination temperature, so it is difficult to greatly lower the calcination temperature even when the Ni content is increased, and thus there is a problem in that it is difficult to reduce the oxygen desorption phenomenon. Oxygen desorption usually occurs on the surface of one-body particles.

As such, when the problem of oxygen desorption of one-body particles requiring a high calcination temperature is not solved, it becomes more difficult to produce a high-Ni cathode active material.

For example, when the Ni content of the one-body particles is less than 60%, the degree of oxygen desorption is not severe, but when the Ni content thereof is 60% or more, the degree of oxygen desorption increases, and particularly, when the Ni content thereof is 80% or more, it becomes very severe. It is impossible to solve this problem due to the high calcination temperature.

Oxygen desorption causes production, in an excessive amount, of NiO, which is a rock-salt structure, in the layered structure of the cathode active material, and increased Li byproducts. Due to repeated charging and discharging, NiO gradually increases to cause increased resistance and an increased amount of Li byproducts causes various side reactions, which results in deterioration of battery performance such as capacity reduction. It is necessary to solve the problem of oxygen desorption in order to commercialize a one-body active material.

In addition to oxygen desorption, structural stability of one-body particles is an important factor determining lifespan. Mn, which functions to improve structural stability, is contained therein along with Ni. When the Ni content increases, the Mn content relatively decreases, thus causing problems of deteriorated structural stability and lifespan. That is, in order to produce high-Ni one-body particles having excellent properties, the two problems of oxygen desorption and lifespan reduction must be solved.

Specifically, Japanese Patent Laid-Open Publication No. 2003-068300, which pertains to a representative prior art related to one-body particles, discloses a one-body particle having an average particle diameter of 0.2 µm or more to 5 µm or less and a solution to the structural problems of secondary particle active materials as described above. Also, this patent discloses a lithium nickel-manganese composite oxide represented by LiNi_{0.5}Mn_{0.5}O₂ as an example of the one-body particle. However, the patent gives no consideration to the problem of oxygen desorption due to a high calcination temperature or to the problem of severe oxygen desorption due to high Ni content such as 60% or more.

In addition, Korean Patent No. 10-1971442, which pertains to a representative prior art related to a secondary particle active material, discloses secondary particles in which sub-micron-sized primary particles are aggregated, wherein the concentration of cobalt at the grain boundary between the primary particles is higher than the concentration of cobalt inside the primary particles. However, the patent also discloses a secondary particle structure and thus cannot solve the above-described structural problem and does not consider the problem of oxygen desorption occurring in one-body particles. In particular, the characteristic whereby a high concentration of cobalt is located at the grain boundary formed between the primary particles does not appear in structurally completely different one-body particles, and thus does not solve the problem resulting from the structural characteristics of the one-body particles described above.

As such, the inherent problems caused by the structural characteristics of one-body particles do not occur in the secondary particle structure, so an approach from a new perspective is needed to fundamentally solve the same.

### [Disclosure]

### [Technical Problem]

Therefore, the present invention has been made to solve the above and other technical problems that have yet to be solved.

Therefore, as a result of extensive research and various experimentation, the present inventors solved problems such as increased resistance and decreased capacity due to NiO, which is a rock-salt structure that is stoichiometrically generated by oxygen desorption during the production of one-body particles and powders, and that, at the same time, solves the problem of deterioration in lifespan that occurs when the Mn content decreases due to the increase in the Ni content.

As described above, the secondary particle structure of the conventional cathode active material is in the form of densely aggregated primary particles, so there is an interface between closely adhered primary particles, whereas novel one-body particles for the cathode active material of the present invention are present as non-aggregated primary particles, and thus do not exhibit the above-mentioned structural characteristics and avoid the problem of separation between the aggregated primary particles.

In particular, as a result of extensive research to reduce oxygen desorption that occurs during calcination of novel one-body particles having a high Ni content and to mitigate the lifespan reduction, the present inventors found that, when a coating layer containing Co and the structure-stabilizing element is formed on the core, the oxygen desorption phenomenon was alleviated, thus leading to improved resistance/capacity/efficiency/residual lithium and lifespan characteristics. Based on this finding, the present invention was completed.

### [Technical Solution]

In accordance with an aspect of the present invention, provided is a novel one-body particle for cathode active materials, including:
a core and a coating layer formed on at least a part of the core,
wherein the coating layer contains both Co and a structure-stabilizing element,
the core is present as a non-aggregated primary particle, and
the structure-stabilizing element has a bond dissociation energy (BDE) with oxygen (O) greater than a bond dissociation energy (BDE) of Co and oxygen (O).

As defined above, the novel one-body particle according to the present invention includes a core present as a non-aggregated primary particle and a coating layer formed in at least a part of the core, wherein the coating layer contains Co and a structure-stabilizing element.

In a specific example, the core of the novel one-body particles of the present invention may be a lithium transition metal oxide containing Ni and the content of Ni may be 60 mol% or more, which may cause severe oxygen desorption during the calcination process, and in particular, preferably 80% or more, which may cause very severe oxygen desorption.

In general, Ni-based one-body particles that contain Ni as a main component among transition metals contain Mn to thereby improve lifespan characteristics. However, when the Ni content increases, the maximum possible content of Mn is relatively reduced, thus reducing structural stability and deteriorating lifespan.

According to the present invention, when Co is contained in the coating layer of the one-body particles, oxygen desorption is alleviated, and the capacity, efficiency and lifespan are improved by the action of Co contained in the coating layer. However, using only the coating layer containing Co, it is impossible to solve the problem of deterioration in lifespan due to a decrease in the Mn content. That is, Mn, which is homogeneously distributed in the entire volume of the novel one-body particle prepared through primary calcination, remarkably improves lifespan characteristics compared to Co in the coating layer formed through secondary calcination, so even if a coating layer containing Co is formed when the Mn content decreases, the lifespan characteristics are deteriorated.

In consideration thereof, the present inventors reviewed additional methods of further improving the lifespan together with the inclusion of Co in various technical aspects. Factors that decrease the lifespan of a secondary battery are combined factors rather than a specific single factor, and a representative factor is the deformation/collapse of the crystal structure due to charging and discharging. When the secondary battery is charged and discharged, the crystal structure contracts/expands, and the distance between the O (oxygen) layers that are separated from one another repeatedly increases and decreases. As this process is repeated, the crystal structure is deformed/collapsed, and the lifespan characteristics are deteriorated. This means that the deformation/collapse of the crystal structure can be suppressed if the distance between the O (oxygen) layers is maintained during charging and discharging. The present inventors predicted that the above-mentioned problems can be solved if these factors are improved.

In order to derive a method of suppressing the deformation/collapse of the crystal structure, it is necessary to first understand the difference between "bond dissociation energy (BDE)" and "bond energy". The term "bond dissociation energy (BDE)" is equal to the bond energy of a diatomic molecule and means the energy of a single chemical bond. In contrast, the term "bond energy" refers to the average of the "bond-dissociation energy" of all bonds of a specific type in a molecule. The bond dissociation energy (BDE) with oxygen of each material is widely known through known literature such as Lange's Handbook of Chemistry, and thus a description thereof will be omitted herein.

Based thereon, the present inventors predicted that, if a material that can bind with strong energy ("structure-stabilizing element") to maintain the distance between O (oxygen) layers during charging and discharging is used in combination with Co, deformation/collapse of the crystal structure can be suppressed, and reviewed the criteria for selecting suitable substances therefor.

According to Lange's Handbook of Chemistry, the bond dissociation energy (BDE) of Co and O (oxygen) applied to the coating layer is 368 kJ/mol. It was found that merely applying Co to the coating layer was insufficient to prevent the distance between O (oxygen) layers from changing during charging and discharging. This finding led to the conclusion that, when a material (structure-stabilizing element) that can bond to O (oxygen) with a stronger force than Co is used in combination with Co, the oxygen-desorption phenomenon can be alleviated, and at the same time, the collapse of the crystal structure can be further suppressed and the lifetime can be greatly improved. The experimental results for this are shown in Table 1, which will be described later.

Therefore, as used herein, the term "structure-stabilizing element" means an element having a BDE greater than the bond dissociation energy (BDE) of Co and O, among elements that may constitute the cathode active material, the types of these elements and the bond dissociation energy thereof with O (oxygen) are as follows, and one element, or two or more elements and/or compounds, may be applied:
Zr (760 kJ/mol), Ti (662 kJ/mol), Al (512 kJ/mol), P (596.6 kJ/mol), Si (798 kJ/mol), B (806 kJ/mol), W (653 kJ/mol), Mg (394 kJ/mol), Sn (548 kJ/mol).

Accordingly, in one specific example, the structure-stabilizing element in the present invention may include one or more elements selected from the group consisting of Zr, Ti, Al, P, Si, B, W, Mg, and Sn. When the structure-stabilizing element contains B, it has a synergetic effect with Co, thus greatly improving the resistance and capacity characteristics.

The experimental results in Table 1 show that the lifespan characteristics vary depending on the Mn content, and when the coating layer containing Co is formed, the resistance and residual lithium are reduced and the lifespan is somewhat improved. In addition, it can be seen that, when the structure-stabilizing element is used in combination with Co, the lifespan is remarkably improved compared to when Co is used alone.

As can be seen from the above, according to the present invention, Co is used to supply desorbed oxygen and at the same time to reduce residual lithium, thereby improving the layer structure recovery and resistance/capacity/efficiency/residual lithium and lifespan of the novel one-body particles, and an element with a strong bond dissociation energy (BDE) with oxygen is used therewith to form a coating layer so as to suppress the movement of the O (oxygen) layer during charging and discharging, suppress deformation/collapse of the crystal structure, and further prolong the lifespan.

As defined above, in the novel one-body particle of the present invention, the core is present as a non-aggregated primary particle.

In one specific example, the non-aggregated primary particle may have an average particle diameter (D50) of 1 µm to 10 µm so as to exhibit appropriate properties for a cathode active material. The cathode active material is present as non-aggregated primary particles having the particle size as described above, thus solving the problems of the conventional secondary particle structure in which the secondary particles are broken and cleaved into primary particles during repeated charging and discharging, thus causing deteriorated battery characteristics.

In another specific example, the coating layer may be formed outside the outermost surface of the core, depending on the production method thereof, or may penetrate to a certain depth inside the surface of the core, so as to define a part of the surface of the core as a coating layer having a certain thickness. The former provides a structure in which the coating layer is formed in an outward direction from the surface of the core, whereas the latter provides a structure in which the coating layer is formed in an inward direction from the surface of the core. That is, elements may be combined from outside the core surface to form a coating layer having a composition different from that of the core, or elements diffuse inwards from the core surface to form a coating layer in which a part of the core surface has a composition different from that of the core. Both may be formed in combination.

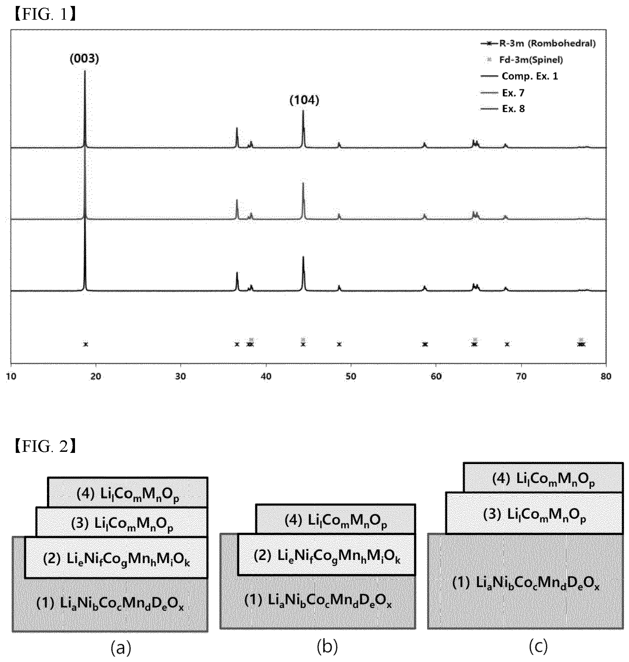

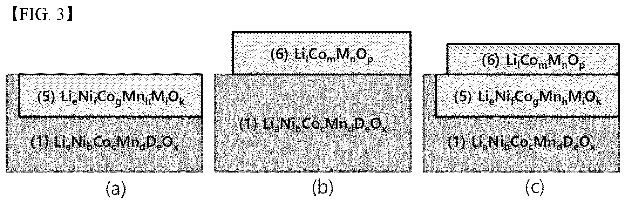

As such, when the coating layer includes two or more layers, a part or the entirety of Co and the structure-stabilizing element may not be present in some layers. However, the remaining layer(s) among the plurality of layers contain Co and/or a structure-stabilizing element and thus the coating layer including all of the plurality of layers may be defined as a layer containing Co and a structure-stabilizing element. Various examples of the coating layer are schematically shown in FIGS. 2 and 3, and will be described again later.

In general, a process of producing an active material as an oxide by calcination of a mixture of a transition metal precursor with a Li raw material (together with a doping raw material in some cases) is referred to as "primary calcination", and a process of calcination of the active material that has undergone additional primary calcination at a relatively low temperature is referred to as "secondary/tertiary/n^{th} calcination" depending on the number of additional calcinations.

When one-body particles with added Co are calcinated, the location and structure of the coating layer may vary depending on the calcination temperature and Ni content. For example, the coating layer formed in the outer direction from the core surface may be classified as an "outer coating layer" and the coating layer formed in the inner direction from the core surface may be classified as an "internal coating layer" depending on the location of the coating layer based on the core surface.

For example, the coating layers may be formed differently depending on the calcination temperature under the constant Ni content conditions. In one specific example, when the Ni content is about 80% and calcination is performed at a low temperature of less than 500 to 700°C, the amount of Co penetrating the inside of the core decreases and a significant amount of Co reacts with Li on the surface to form a coating layer in the form of LCO (LiCoO₂). When Co forms a coating layer on the outside, the effect of improving oxygen desorption is relatively reduced, but the resistance reduction effect increases because residual Li is greatly reduced.

On the other hand, when calcination is performed at a high temperature of 700 to 800°C under the constant Ni content conditions, a significant amount of Co diffuses from the core surface to the core inside to a predetermined depth, forming a coating layer with a predetermined thickness. Co is characterized by entering the core along with a large amount of oxygen (O). Thus, Co is supplied into the core along with oxygen (O). Specifically, as the Ni content increases, oxygen desorption at the surface also rapidly increases. When Co diffuses into the core, it draws external oxygen into the core and induces recombination of Li and oxygen, thus reducing oxygen desorption at the surface. In other words, the crystal structure, which has become unstable due to oxygen desorption, is restored to a uniform layered structure due to recombination with the oxygen introduced inside the core, thus improving resistance/capacity/efficiency/lifespan characteristics.

As described above, the coating layers formed on the surface of the core and inside the core near the core surface have their own characteristic effects and the coating layers having a composite structure, that is, a composite structure in which some of the coating layers are formed on the surface of the core and others are formed inside the core also have excellent effects.

In addition, oxygen desorption occurs mainly in the surface area corresponding to about 10% of the length from the center of the core to the surface thereof. Therefore, it is preferable that the thickness of the coating layer should be within 10% of the average particle diameter of the core so that the coating layer includes the area where oxygen desorption mainly occurs.

The coating layer may include at least one of an external coating layer that contains at least one of Co, Zr, Ti, Al, P, Si, B, W, Mg, and Sn, and is formed outward from the core surface, and an internal coating layer that contains at least one of Ni, Co, and Mn (preferably, Ni and Co) and at least one of Zr, Ti, Al, P, Si, B, W, Mg, and Sn, and is formed inward from the core surface. However, as described above, when the coating layer includes a plurality of layers, such as two or more external coating layers, or two or more internal coating layers, or a combination of one or more external coating layers and one or more internal coating layers, some layers may not contain some or all of the elements, but the coating layer at least satisfies the requirement of containing Co and structure-stabilizing element from the overall viewpoint of the coating layer.

In one specific example, in the present invention, the core, which is a lithium transition metal oxide containing Ni, may have the following Formula 1, the coating layer may include at least one of the following Formulas 2 to 6 and examples of coating layers formed based thereon are shown in FIGS. 2 and 3. The coating layer may be formed as a single layer or may be formed as two or more layers depending on the Ni content, calcination temperature, calcination method, or the like.
[Formula 1] - Core

   LiₐNi_{b}Co_{c}Mn_{d}DₑOₓ (1)

   wherein a, b, c, d, e and x satisfy 0.95≤a≤1.1, 0<b≤1, 0≤c≤0.4, 0≤d≤1, 0≤e≤0.05, and 0<x≤4, respectively, and
   D includes at least one of Ti, Zr, Al, P, Si, B, W, Mg, and Sn.
[Formula 2] - Internal coating layer

   LiₑNi_{f}Co_{g}MnₙMᵢOₖ (2)

   wherein e, f, g, h, i, and k satisfy 0.95≤e≤1.1, 0≤f<1, 0<g<1, 0≤h<1, 0≤i<1, and 0<k≤4, respectively, with the proviso that g>i, and
   M includes at least one of Ti, Zr, Al, P, Si, B, W, Mg, and Sn.

Preferably, f satisfies 0<f<1.
[Formula 3] - External coating layer

   LiₗCoₘMₙOₚ (3)

   wherein l, m, n, and p satisfy 0≤l≤1.1, 0≤m≤1, 0 ≤ n<1, and 0<p≤4, respectively, with the proviso that m>n, and
   M includes at least one of Ti, Zr, Al, P, Si, B, W, Mg, and Sn.
[Formula 4] - External coating layer

   LiₗCoₘMₙOₚ (4)

   wherein l, m, n and p satisfy 0≤l≤1.1, 0≤m<1, 0<n<1, and 0<p≤4, respectively, with the proviso that m<n.
   M includes at least one of Ti, Zr, Al, P, Si, B, W, Mg, and Sn.
[Formula 5] - Internal coating layer

   LiₑNi_{f}Co_{g}MnₕMᵢOₖ (5)

   wherein e, f, g, h, i, and k satisfy 0.95≤e≤1.1, 0≤f<1, 0<g<1, 0≤h<1, 0≤i<1, and 0<k≤4, respectively,
   M includes at least one of Ti, Zr, Al, P, Si, B, W, Mg, and Sn.

Preferably, f satisfies 0<f<1.
[Formula 6] - External coating layer

LiₗCoₘMₙOₚ (6)

wherein l, m, n and p satisfy 0≤1≤1.1, 0<m<1, 0<n<1, 0<p≤4, respectively,
M includes at least one of Ti, Zr, Al, P, Si, B, W, Mg, and Sn.

Examples 5 to 11 which will be described later may include one or two or more coating layers of Formulas 2 to 4, and Examples 1 to 4 may include one or more coating layers of Formulas 5 to 6.

As can be seen from FIGS. 2 and 3, in the formulas above, the material when the coating layer is mainly formed inside the core may have the composition of Formula 2 or 5, and the material when the coating layer is mainly formed outside the core may have the composition of Formula 3, 4 or 6. Compositions of Formulas 2 to 4 and compositions of Formulas 5 to 6 may be present in combination. For reference, M in the internal coating layers of Formulas 2 and 5 may be partially derived from the core, or partially derived from the raw materials for producing the coating layer, or partially derived from the core and partially derived from the coating layer raw materials.

As can be seen from the above formulas, there may be cases in which the same element as the structure-stabilizing element among the element(s) constituting the core is contained. In this case, at least one of Co and the structure-stabilizing element may have a higher content in the coating layer than in the core, and preferably, both Co and the structure-stabilizing element may have a higher content in the coating layer than in the core.

In terms of more effectively alleviating oxygen desorption and improving lifespan characteristics, it may be more preferable for the content of at least one of Co and the structure-stabilizing element in the coating layer to be at least 10% higher than the content (mol%) of the same element in the core.

The coating layer may include a spinel structure formed through low-temperature calcination, or a layered structure formed through relatively high-temperature calcination.

In one specific example, the novel one-body particle of the present invention can satisfy one or more of the following conditions of the ratio of (003)/(104) exceeds 1.52 upon XRD pattern measurement and the C-axis length exceeds 14.2000Å upon XRD pattern measurement and preferably, both of the above conditions.

The difference in the ratio of the layered structure that satisfies the rhombohedral (R-3m) structure can be confirmed by comparing the intensity ratio of peaks (003) to (104) in the XRD pattern. As the ratio of (003)/(104) increases, the cation mixing rate due to movement of Ni⁴⁺ ions decreases, which means that the layered structure is well formed. The novel one-body particle of the present invention generally satisfies the requirement that the ratio of (003)/(104) is greater than 1.52.

In addition, the novel one-particle of the present invention increases the distance between metals by combining Co and structure-stabilizing element with oxygen in the layered structure of the active material and thus generally satisfies the requirement that the C-axis length exceeds 14.2000 Å.

The present invention also provides a method of preparing a novel one-body powder containing unaggregated one-body particles and specifically, the method may include the following steps:
(a) mixing a transition metal precursor containing Ni with a Li raw material to prepare a first mixture;
(b) primary calcination of calcining the first mixture to produce a primary calcination product; and
(c) forming a coating layer containing Co and a structure-stabilizing element in at least a portion of the primary calcination product.

The structure-stabilizing element has a greater bond-dissociation energy (BDE) with oxygen (O) than the bond-dissociation energy between Co and oxygen (O).

As described above, the one-body particle is not made in the form of one unit of particle, but a plurality of one-body particles because of the characteristics of general processes. Therefore, the preparation method is defined as a method of preparing a one-body powder containing a plurality of one-body particles.

In the preparation step (a), the "transition metal precursor containing Ni" is interpreted to include both a precursor containing Ni and a precursor containing Ni and one or more transition metals other than Ni, and they may be prepared, for example, by coprecipitation. "Li raw material" is a material containing lithium, for example, Li₂CO₃, LiOH, or the like.

In some cases, doping raw materials may be further mixed with the first mixture in the preparation step (a).

The primary calcination (b) is a step of calcining the prepared first mixture to produce a primary calcination product. Generally, the calcination temperature varies depending on the particle shape (one-body structure/secondary particle structure) and Ni content. In the examples described later, the primary calcination was performed at 890 to 930°C, but the range may be selected from 700 to 1,000°C. If necessary, the calcination may be performed in several divided temperature sections within the corresponding temperature range. The primary calcination product that has underwent the primary calcination at high temperature is in an oxide state. When the primary calcination product is mixed with a doping raw material in the preparation step (a), a doped cathode active material oxide powder (primary calcination product) is prepared.

The coating layer forming step (c) of forming a coating layer containing Co and a structure-stabilizing element in at least a part of the primary calcination product may be configured in various ways as follows depending on the type of the desired coating layer.

In the first embodiment (A), the coating layer forming step (c) may include secondary calcining including mixing the primary calcination product with a Co raw material and a structure-stabilizing element raw material and calcining the resulting mixture.

In the second embodiment (B), the coating layer forming step (c) includes secondary calcining including mixing the primary calcination product with the Co raw material and calcining the resulting mixture, and tertiary calcining including mixing the secondary calcination product with a structure-stabilizing element raw material and calcining the resulting mixture.

In the third embodiment (C), the coating layer forming step (c) includes secondary calcining including mixing the primary calcination product with the Co raw material and calcining the resulting mixture, and tertiary calcining including mixing the secondary calcination product with a Co raw material and calcining the resulting mixture.

The term "Co raw material" is a material containing Co. For example, the Co raw material may be selected from hydroxides such as Co(OH)₂ and Co(OH)₃, oxide, and various salts such as CoSO₄, and the term "structure-stabilizing element raw material" is a material containing a structure-stabilizing element, for example, oxide, any of various salts, and hydroxides of structure-stabilizing element such as H₃BO₃, B₂O₃, ZrO₂, TiO₂, Al₂O₃, or (NH₄)₃PO₄, but is not limited thereto. The structure-stabilizing element is preferably B (boron).

The calcination temperature for forming the coating layer may vary depending on the type of structure-stabilizing element used along with Co and the type of coating layer (single layer/multilayer), and may range from 250 to 800°C, for example.

In the experiments described later, Examples 1 to 4 correspond to the first embodiment (A), Examples 6 to 11 correspond to the second embodiment (B), and Example 5 corresponds to the third embodiment (C). In the second and third embodiments (B) and (C), the secondary calcination and tertiary calcination temperatures may be appropriately set depending on the type of Co raw material and structure-stabilizing element raw material.

The present invention also provides an electrode and a secondary battery including the novel one-body particle. The configuration and production method of the electrode and secondary battery are known in the art, and thus a detailed description thereof will be omitted herein.

### [Effects of the Invention]

As described above, the novel one-body particle according to the present invention has effects of solving the problem of the conventional secondary particle structure in the cathode active material having a high Ni content, alleviating oxygen desorption that occurs during calcination of the one-body particle, and greatly improving resistance/capacity/efficiency/residual lithium/lifespan characteristics.

### [Description of the Drawings]

FIG. 1 is a graph showing the XRD patterns of the cathode active materials of Comparative Example 1, Example 7, and Example 8 performed in Experimental Example 4; and
FIGS. 2 and 3 are schematic diagrams illustrating the configuration of a coating layer including at least one of an internal coating layer and an external coating layer according to an embodiment of the present invention.

### [Best mode]

Now, the present invention will be described in more detail with reference to the following examples. These examples should not be construed as limiting the scope of the present invention.

### [Comparative Example 1]

NiSO₄ as a nickel precursor, CoSO₄ as a cobalt precursor, and MnSO₄ as a manganese precursor were added at a molar ratio of 0.88:0.04:0.08 to water to prepare an aqueous solution of a nickel-cobalt-manganese hydroxide precursor. An aqueous solution of sodium hydroxide was slowly added dropwise while stirring the aqueous solution for 5 hours to neutralize the aqueous precursor solution to thereby precipitate Ni_{0.88}Co_{0.04}Mn_{0.08}(OH)₂ as nickel-cobalt-manganese hydroxide.

The precursor (nickel-cobalt-manganese hydroxide) thus obtained was mixed with LiOH, followed by primary calcination at 910°C for 6 hours to prepare LiNi_{0.88}Co_{0.04}Mn_{0.08}O₂.

### [Comparative Example 2]

NiSO₄ as a nickel precursor and CoSO₄ as a cobalt precursor were added at a molar ratio of 0.88:0.12 to water to prepare an aqueous solution of a nickel-cobalt-manganese hydroxide precursor. An aqueous solution of sodium hydroxide was slowly added dropwise while stirring the aqueous solution for 5 hours to neutralize the aqueous precursor solution to thereby precipitate Ni_{0.88}Co_{0.12}(OH)₂ as nickel-cobalt hydroxide.

The precursor (nickel-cobalt hydroxide) thus obtained was mixed with LiOH, followed by primary calcination at 910°C for 6 hours to prepare LiNi_{0.88}Co_{0.12}O₂.

### [Comparative Example 3]

Co(OH)₂ corresponding to 1.5 mol of Co was mixed with the primarily calcined cathode active material of Comparative Example 1, followed by secondary calcination at 750°C for 7 hours to form a coating layer containing cobalt (Co) on the surface of the active material.

### [Comparative Example 4]

NiSO₄ as a nickel precursor, CoSO₄ as a cobalt precursor, and MnSO₄ as a manganese precursor were added at a molar ratio of 0.75:0.1:0.15 to water to prepare an aqueous solution of a nickel-cobalt-manganese hydroxide precursor. An aqueous solution of sodium hydroxide was slowly added dropwise while stirring the aqueous solution for 5 hours to neutralize the aqueous precursor solution to thereby precipitate Ni_{0.75}Co_{0.1}Mn_{0.15}(OH)₂ as nickel-cobalt-manganese hydroxide.

The precursor (nickel-cobalt-manganese hydroxide) thus obtained was mixed with LiOH, followed by primary calcination at 890°C for 6 hours to prepare LiNi_{0.75}Co_{0.1}Mn_{0.15}O₂.

### [Comparative Example 5]

NiSO₄ as a nickel precursor, CoSO₄ as a cobalt precursor, and MnSO₄ as a manganese precursor were added at a molar ratio of 0.95:0.025:0.025 to water to prepare an aqueous solution of a nickel-cobalt-manganese hydroxide precursor. An aqueous solution of sodium hydroxide was slowly added dropwise while stirring the aqueous solution for 5 hours to neutralize the aqueous precursor solution to thereby precipitate Ni_{0.95}Co_{0.025}Mn_{0.025}(OH)₂ as nickel-cobalt-manganese hydroxide.

The precursor (nickel-cobalt-manganese hydroxide) thus obtained was mixed with LiOH, followed by primary calcination at 930°C for 6 hours to prepare LiNi_{0.95}Co_{0.025}Mn_{0.025}O₂.

### [Example 1]

Co(OH)₂ and B₂O₃ corresponding to 1.5 mol of Co and 0.05 mol of B, respectively, were mixed with the primarily calcined cathode active material of Comparative Example 1, followed by secondary calcination at 750°C for 7 hours to form a coating layer containing cobalt (Co) and boron (B) on the surface of the active material.

### [Example 2]

Co(OH)₂ and B₂O₃ corresponding to 1.5 mol of Co and 0.05 mol of B, respectively, were mixed with the primarily calcined cathode active material of Comparative Example 1, followed by secondary calcination at 600°C for 7 hours to form a coating layer containing cobalt (Co) and boron (B) on the surface of the active material.

### [Example 3]

Co(OH)₂ and B₂O₃ corresponding to 1.5 mol of Co and 0.05 mol of B, respectively, were mixed with the primarily calcined cathode active material of Comparative Example 1, followed by secondary calcination at 450°C for 7 hours to form a coating layer containing cobalt (Co) and boron (B) on the surface of the active material.

### [Example 4]

Co(OH)₂ and B₂O₃ corresponding to 1.5 mol of Co and 0.05 mol of B, respectively, were mixed with the primarily calcined cathode active material of Comparative Example 1, followed by secondary calcination at 300°C for 7 hours to form a coating layer containing cobalt (Co) and boron (B) on the surface of the active material.

### [Example 5]

B₂O₃ corresponding to 0.05 mol of B was mixed with the primarily calcined cathode active material of Comparative Example 1, followed by secondary calcination at 300°C for 7 hours to form a coating layer containing boron (B) on the surface of the active material.

Co(OH)₂ corresponding to 1.5 mol of Co was mixed with the active material thus obtained, followed by tertiary calcination at 750°C for 7 hours to form a coating layer containing Co (cobalt).

### [Example 6]

Co(OH)₂ corresponding to 1.5 mol of Co was mixed with the primarily calcined cathode active material of Comparative Example 1, followed by secondary calcination at 750°C for 7 hours to form a coating layer containing cobalt (Co).

B₂O₃ corresponding to 0.05 mol of B was mixed with the active material thus obtained, followed by tertiary calcination at 450°C for 7 hours to form a coating layer containing B (boron).

### [Example 7]

Co(OH)₂ corresponding to 1.5 mol of Co was mixed with the primarily calcined cathode active material of Comparative Example 1, followed by secondary calcination at 750°C for 7 hours to form a coating layer containing cobalt (Co).

B₂O₃ corresponding to 0.05 mol of B was mixed with the active material thus obtained, followed by tertiary calcination at 300°C for 7 hours to form a coating layer containing B (boron).

### [Example 8]

Co(OH)₂ corresponding to 1.5 mol of Co was mixed with the primarily calcined cathode active material of Comparative Example 1, followed by secondary calcination at 500°C for 7 hours to form a coating layer containing cobalt (Co).

B₂O₃ corresponding to 0.05 mol of B was mixed with the active material thus obtained, followed by tertiary calcination at 300°C for 7 hours to form a coating layer containing B (boron).

### [Example 9]

Co(OH)₂ corresponding to 1.5 mol of Co was mixed with the primarily calcined cathode active material of Comparative Example 1, followed by secondary calcination at 750°C for 7 hours to form a coating layer containing cobalt (Co).

B₂O₃ corresponding to 0.05 mol of B was mixed with the active material thus obtained, followed by tertiary calcination at 250°C for 7 hours to form a coating layer containing B (boron).

### [Example 10]

NiSO₄ as a nickel precursor, CoSO₄ as a cobalt precursor, and MnSO₄ as a manganese precursor were added at a molar ratio of 0.75:0.10:0.15 to water to prepare an aqueous solution of a nickel-cobalt-manganese hydroxide precursor. An aqueous solution of sodium hydroxide was slowly added dropwise while stirring the aqueous solution for 5 hours to neutralize the aqueous precursor solution to thereby precipitate Ni_{0.75}Co_{0.10}Mn_{0.15}(OH)₂ as nickel-cobalt-manganese hydroxide.

The precursor (nickel-cobalt-manganese hydroxide) thus obtained was mixed with LiOH, followed by primary calcination at 930°C for 6 hours to prepare LiNi_{0.75}Co_{0.10}Mn_{0.15}O₂.

Co(OH)₂ corresponding to 1.5 mol of Co was mixed with the primarily calcined cathode active material, followed by secondary calcination at 750°C for 7 hours to form a coating layer containing cobalt (Co).

B₂O₃ corresponding to 0.05 mol of B was mixed with the active material thus obtained, followed by tertiary calcination at 300°C for 7 hours to form a coating layer containing B (boron).

### [Example 11]

NiSO₄ as a nickel precursor, CoSO₄ as a cobalt precursor, and MnSO₄ as a manganese precursor were added at a molar ratio of 0.92:0.04:0.04 to water to prepare an aqueous solution of a nickel-cobalt-manganese hydroxide precursor. An aqueous solution of sodium hydroxide was slowly added dropwise while stirring the aqueous solution for 5 hours to neutralize the aqueous precursor solution to thereby precipitate Ni_{0.92}Co_{0.04}Mn_{0.04}(OH)₂ as nickel-cobalt-manganese hydroxide.

The precursor (nickel-cobalt-manganese hydroxide) thus obtained was mixed with LiOH, followed by primary calcination at 890°C for 6 hours to prepare LiNi_{0.92}Co_{0.04}Mn_{0.04}O₂.

Co(OH)₂ corresponding to 1.5 mol of Co was mixed with the primarily calcined cathode active material, followed by secondary calcination at 750°C for 7 hours to form a coating layer containing cobalt (Co).

B₂O₃ corresponding to 0.05 mol of B was mixed with the active material thus obtained, followed by tertiary calcination at 300°C for 7 hours to form a coating layer containing B (boron).

### [Experimental Example 1] - Measurement of resistance

The cation active material synthesized in each of Comparative Examples 1 to 5, and Examples 1 to 11, Super-P as a conductive material, and PVdF as a binder were mixed at a weight ratio of 96:2:2 in the presence of N-methylpyrrolidone as a solvent to prepare a cathode active material slurry. The cathode active material slurry was applied onto an aluminum current collector, dried at 120°C, and then rolled to produce a cathode.

A porous polyethylene film as a separator was interposed between the cathode produced as described above and an anode as a Li metal to produce an electrode assembly, the electrode assembly was placed in a battery case, and an electrolyte was injected into the battery case to produce a lithium secondary battery. The electrolyte used herein was prepared by dissolving 1.0M lithium hexafluorophosphate (LiPF₆) in an organic solvent consisting of ethylene carbonate/dimethyl carbonate (mixed at a volume ratio of EC/DMC = 1/1).

Each of the lithium secondary batteries thus produced was subjected to charge (at 0.1C, 4.25V) and discharge (at 0.1C, 2.5V). The applied current was divided by a voltage change for 0 to 65 seconds from the start of the discharge to calculate a resistance (V/I=R). The results are shown in Table 1 below.

### [Experimental Example 2] - Measurement of residual lithium

Residual lithium was measured under the following conditions in the cathode active materials prepared in Comparative Examples 1 to 5 and Examples 1 to 11, and the results are shown in Table 1 below.

### ① Sample pretreatment

- 5±0.01 g of sample and 100 g of distilled water were added to a conical beaker containing a magnetic bar, followed by stirring for 5 minutes.
- The stirred sample was naturally filtered through filter paper.
- The filtrate was titrated in a beaker.

### ② Test method

- A titrator was charged with a titrant (0.1N HCl), and then bubbles were removed from the cylinder.
- Titrant: 0.1N HCl
- Titrant aliquot method: DET
- Condition for automatic completion of titration: pH 2.5
- Calculation: FP(1) = 4.5, EP(1)
- Titration rate: Greatest.

### [Experimental Example 3] - Measurement of lifespan and resistance increment

As can be seen from Experimental Example 1, a lithium secondary battery was prepared based on each of the cathode active materials prepared in Comparative Examples 1 to 5 and Examples 1 to 11 and was subjected to charge (at 0.5C and 4.25V) and discharge (at 1.0C and 2.5V) 50 times at 45°C, and the lifespan and resistance increment thereof were measured. The results are shown in Table 1 below.

**[Table 1]**

| Item | Characteristics | | | | | | |
|---|---|---|---|---|---|---|---|
| | Resistance (Ohm) | Charge capacity (mAh/g) | Discharge capacity (mAh/g) | Efficiency (%) | Residual lithium (%) | Lifespan (%) | Resistance increment (%) |
| Comparative Example 1 | 22.7 | 224.7 | 196.9 | 87.6 | 0.599 | 90.2 | 141.1 |
| Comparative Example 2 | 20.4 | 225.1 | 197.8 | 87.9 | 0.612 | 89.1 | 167.4 |
| Comparative Example 3 | 18.1 | 226.1 | 199.7 | 88.3 | 0.427 | 90.9 | 131.9 |
| Comparative Example 4 | 17.1 | 220.4 | 193.8 | 87.9 | 0.325 | 91.7 | 122.1 |
| Comparative Example 5 | 23.1 | 234.9 | 205.1 | 87.3 | 0.985 | 84.4 | 186.2 |
| Example 1 | 16 | 228.1 | 201.2 | 88.2 | 0.413 | 91.1 | 122 |
| Example 2 | 16.1 | 229.4 | 202.1 | 88.1 | 0.398 | 92.8 | 116.1 |
| Example 3 | 17.4 | 230.2 | 203.7 | 88.5 | 0.358 | 93.5 | 88.6 |
| Example 4 | 22.5 | 232.1 | 205.1 | 88.4 | 0.296 | 92.1 | 103.5 |
| Example 5 | 18.2 | 229.3 | 202.8 | 88.4 | 0.297 | 94.3 | 67.7 |
| Example 6 | 17.7 | 224.6 | 203.2 | 90.5 | 0.291 | 94.4 | 58.5 |
| Example 7 | 17.8 | 230.2 | 208.1 | 90.4 | 0.276 | 94.7 | 53.3 |
| Example 8 | 17.1 | 227.6 | 203 | 89.2 | 0.286 | 93.2 | 73.3 |
| Example 9 | 17 | 227.5 | 205.5 | 90.3 | 0.311 | 94.2 | 59.8 |
| Example 10 | 14 | 224.1 | 200.6 | 89.5 | 0.121 | 95.7 | 43.1 |
| Example 11 | 34.2 | 242.2 | 213.1 | 88.0 | 0.597 | 88.8 | 90.8 |

As can be seen from Table 1, Examples 1 to 4 exhibit improvement in resistance, charge and discharge capacity, lifespan, and resistance increment compared to Comparative Examples 1 to 3. Examples 1 to 4 have an effect of improving lifespan and resistance increment compared to Comparative Example 3, which means that B (boron) acts as a structure-stabilizing element.

Example 5 exhibits improvement in charge and discharge capacity, lifespan, and resistance increment compared to Comparative Example 3, and Examples 6 to 9 exhibits great improvement in charge and discharge capacity, lifespan, and resistance increment compared to Comparative Example 3.

The Ni70-based and Ni90-based compositions corresponding to Examples 10 and 11 exhibit increased charge and discharge capacity, decreased resistance increment, and improved lifespan compared to those of Comparative Examples 4 and 5. In other words, Ni compositions other than Ni80-based compositions can further improve lifespan characteristics due to improved structural stability through the structural stabilizing element. In particular, when B (boron) is used as the structure-stabilizing element, the reversible capacity can also be improved.

### [Experimental Example 4] - XRD pattern analysis

The XRD patterns of the cathode active materials prepared in Comparative Example 1, Example 7, and Example 8 were measured under the following measurement conditions, and the results are shown in FIG. 1.

The result of analysis of the ratio of (003)/(104) in the XRD patterns shows that Comparative Example 1 exhibits a ratio of (003)/(104) of 1.52, Example 8 exhibits a ratio of (003)/(104) of 1.62, and Example 7 exhibits a ratio of (003)/(104) of 1.69, which indicates that the ratio of layered structure formed in the coating layer of Example 7 was the highest.

In addition, Comparative Example 1 exhibits a C-axis length of 14.2000Å, Example 8 exhibits a C-axis length of 14.2003Å, and Example 7 exhibits a C-axis length of 14.2018Å, which indicates that the Co and structure-stabilizing element of Example 7 bonds to oxygen in the layered structure of the cathode active material to increase the distance between metals, and Example 8 has a relatively poor layered structure in the coating layer compared to Example 7, which is consistent with the surface diffusion results of Co and structure-stabilizing element shown in FIG. 1.

### [XRD measurement conditions]

- Power source: CuKα (line focus), Wavelength: 1.541836Å
- Operating axis: 2θ/θ, Measurement method: Continuous, Counting unit: cps
- Start angle: 10.0°, End angle: 80.0°, Integration Frequency: 1 time
- Sampling width: 0.01°, Scan speed: 1.3°/min
- Voltage: 40 kV, Current: 40 mA
- Divergence slit: 0.2 mm, Divergence type limit slit: 10 mm
- Scattering slit: Open, Receiving slit: Open
- Offset Angle: 0°
- Goniometer Radius: 285 mm, Optical System: Focusing Method
- Attachment: ASC-48
- Slit: Slit for D/teX Ultra
- Detector: D/teX Ultra
- Incident Monochrome: CBO
- Ni-Kβ Filter: None
- Rotational speed: 30 rpm

Although preferred embodiments of the present invention have been disclosed for illustrative purposes, those skilled in the art will appreciate that various modifications, additions, and substitutions are possible without departing from the scope and spirit of the invention as disclosed in the accompanying claims.

## Claims

1. A novel one-body particle for cathode active materials, comprising:
a core; and
a coating layer formed on at least a part of the core,
wherein the coating layer comprises Co and a structure-stabilizing element,
the core is present as a non-aggregated primary particle, and
the structure-stabilizing element has a bond dissociation energy (BDE) with oxygen (O) greater than a bond dissociation energy (BDE) of Co and oxygen (O).

2. The novel one-body particle according to claim 1, wherein the core is lithium transition metal oxide containing Ni.

3. The novel one-body particle according to claim 1, wherein the structure-stabilizing element comprises at least one selected from the group consisting of Zr, Ti, Al, P, Si, B, W, Mg and Sn.

4. The novel one-body particle according to claim 1, wherein the coating layer is formed as a single layer.

5. The novel one-body particle according to claim 1, wherein the coating layer is formed as a multi-layer comprising at least two layers.

6. The novel one-body particle according to claim 1, wherein the coating layer comprises:
at least one of an external coating layer containing at least one of Co, Zr, Ti, Al, P, Si, B, W, Mg, and Sn, and being formed outward from the core surface; and
an internal coating layer containing at least one of Ni, Co, and Mn, and at least one of Zr, Ti, Al, P, Si, B, W, Mg, and Sn, and being formed inward from the core surface.

7. The novel one-body particle according to claim 1, wherein the core comprises a composition of the following Formula 1:
LiₐNi_{b}Co_{c}Mn_{d}DₑOₓ (1)
wherein a, b, c, d, e and x satisfy 0.95≤a≤1.1, 0<b≤1, 0≤c≤0.4, 0≤d≤1, 0≤e≤0.05, and 0<x≤4, respectively, and
D includes at least one of Ti, Zr, Al, P, Si, B, W, Mg, and Sn.

8. The novel one-body particle according to claim 1, wherein the internal coating layer comprises at least one composition of the following Formulas 2 and 5:
LiₑNi_{f}Co_{g}MnₕMᵢOₖ (2)
wherein e, f, g, h, i, and k satisfy 0.95≤e≤1.1, 0≤f<1, 0<g<1, 0≤h<1, 0≤i<1, and 0<k≤4, respectively, with the proviso that g>i, and
M includes at least one of Ti, Zr, Al, P, Si, B, W, Mg, and Sn,
LiₑNi_{f}Co_{g}MnₕMᵢOₖ (5)
wherein e, f, g, h, i, and k satisfy 0.95≤e≤1.1, 0≤f<1, 0<g<1, 0≤h<1, 0≤i<1, and 0<k≤4, respectively,
M includes at least one of Ti, Zr, Al, P, Si, B, W, Mg, and Sn.

9. The novel one-body particle according to claim 1, wherein the external coating layer comprises at least one composition of the following Formulas 3, 4 and 6:
LiₗCoₘMₙOₚ (3)
wherein l, m, n, and p satisfy 0≤l≤1.1, 0≤m≤1, 0≤n<1, and 0<p≤4, respectively, with the proviso that m>n, and
M includes at least one of Ti, Zr, Al, P, Si, B, W, Mg, and Sn,
LiₗCoₘMₙOₚ (4)
wherein l, m, n and p satisfy 0≤l≤1.1, 0≤m<1, 0<n<1, and 0<p≤4, respectively, with the proviso that m<n, and
M includes at least one of Ti, Zr, Al, P, Si, B, W, Mg, and Sn,
LiₗCoₘMₙOₚ (6)
0≤l≤1.1, 0<m<1, 0<n<1, and 0<p≤4, and
M includes at least one of Ti, Zr, Al, P, Si, B, W, Mg, and Sn.

10. The novel one-body particle according to claim 1, wherein the one-body particle has a ratio of (003)/(104) higher than 1.52 upon XRD pattern measurement.

11. The novel one-body particle according to claim 1, wherein the one-body particle has a C-axis length higher than 14.2000Å upon XRD pattern measurement.

12. A method of preparing a novel one-body powder containing unaggregated one-body particles comprising:
(a) mixing a transition metal precursor containing Ni with a Li raw material to prepare a first mixture;
(b) primary calcination of calcining the first mixture to produce a primary calcination product; and
(c) forming a coating layer containing Co and a structure-stabilizing element in at least a portion of the primary calcination product,
wherein the structure-stabilizing element has a greater bond-dissociation energy (BDE) with oxygen (O) than a bond-dissociation energy between Co and oxygen (O).

13. The method according to claim 12, wherein the step of preparation (a) further comprises mixing with a doping raw material.

14. The method according to claim 12, wherein the step of forming the coating layer (c) comprises secondary calcining comprising mixing the primary calcination product with a Co raw material and a structure-stabilizing element raw material, and calcining the resulting mixture.

15. The method according to claim 12, wherein the step of forming the coating layer (c) further comprises:
secondary calcining comprising mixing the primary calcination product with a Co raw material and calcining the resulting mixture; and
tertiary calcining comprising mixing the secondary calcination product with a structure-stabilizing element raw material and calcining the resulting mixture.

16. The method according to claim 12, wherein the step of forming the coating layer (c) comprises:
secondary calcining comprising mixing the primary calcination product with a structure-stabilizing element raw material and calcining the resulting mixture; and
tertiary calcining comprising mixing the secondary calcination product with a Co raw material and calcining the resulting mixture.

17. The method according to claim 12, wherein the structure-stabilizing element comprises at least one of Zr, Ti, Al, P, Si, B, W, Mg and Sn.

18. The method according to claim 12, wherein the step of forming the coating layer (c) comprises calcining at 250 to 800°C.

19. An electrode comprising the novel one-body particle according to claim 1.

20. A secondary battery comprising the novel one-body particle according to claim 1.
